# FASCICULE DE BREVET EUROPEEN

(11) **EP 2 124 580 B1**
(45) Date de publication et mention de la délivrance du brevet: **05.01.2011**
(21) Numéro de dépôt: 08762081.1
(22) Date de dépôt: 13.02.2008
(51) Int. Cl.: A21C 11/16, A23L 1/00, A23P 1/12, A23P 1/14

(54) **PROCÉDÉ ET INSTALLATION DE FABRICATION EN CONTINU D'UN PRODUIT ALIMENTAIRE EXPANSÉ**
VERFAHREN UND AUSRÜSTUNG ZUR KONTINUIERLICHEN HERSTELLUNG EINES ERWEITERTEN NAHRUNGSMITTELS
METHOD AND EQUIPMENT FOR THE CONTINUOUS PRODUCTION OF AN EXPANDED FOOD PRODUCT

(30) Priorité: 15.02.2007 FR 0753280
(43) Date de publication de la demande: 02.12.2009
(73) Titulaire: Clextral, 42700 Firminy (FR)
(72) Inventeur: BOUVIER, Jean-Marie, F-42000 Saint-Etienne (FR); DURAND, Daniel, F-42500 Le Chambon-Feugerolles (FR); MALLER, Gilles, F-42680 Saint-Marcellin-en-Forez (FR); PERENON, Anne, F-42340 Veauche (FR)
(74) Mandataire: Domenego, Bertrand
(86) Numéro de dépôt international: PCT/FR2008/050231
(87) Numéro de publication internationale: WO 2008/104709

(56) Documents cités:
- EP-A- 0 169 106
- WO-A-02/069744
- FR-A- 2 572 899
- FR-A- 2 879 898
- US-A- 4 741 916

## Description

La présente invention se rapporte au domaine de la cuisson-extrusion de produits alimentaires consommables. Plus précisément, la présente invention concerne un procédé de fabrication en continu d'un produit alimentaire expansé et consommable, contenant des inclusions solides de taille supérieure à 0,5 mm et obtenu à partir d'une matière première solide contenant en partie des carbohydrates et/ou des protéines.

Dans le document FR-A-2 572 899, il est connu de fabriquer un produit alimentaire expansé ou non, fourré ou non, tel qu'un pain, un produit brioché ou analogue, à partir d'une matière contenant des carbohydrates, en mettant en oeuvre un procédé de cuisson-extrusion.

Dans un tel procédé, une vis d'une machine d'extrusion est entraînée en rotation dans un corps en forme de fourreau et effectue sur la matière première, un traitement approprié qui comprend notamment au moins une étape de malaxage, une étape de compression et une étape de cuisson de la matière première. L'extrémité avale du fourreau d'extrusion est pourvue d'une filière, par laquelle le produit alimentaire fabriqué à partir de la matière première s'échappe de ladite machine d'extrusion.

Par ailleurs, on connaît des produits alimentaires fabriqués à partir de carbohydrates et contenant des inclusions telles que exemple des fragments de noisettes ou de chocolat ou d'autres fragments. Ces produits alimentaires sont fabriqués en mettant en oeuvre des procédés traditionnels, dans une première étape desquels une pâte est élaborée à partir de divers ingrédients et malaxée dans une cuve. Les inclusions sont introduites dans la pâte lors de cette première étape, après laquelle la pâte est sortie de la cuve, fragmentée et placée dans un four de cuisson. Une deuxième étape consiste à faire cuire les fragments de pâte dans ce four.

Ce type de procédés traditionnels présente des inconvénients qui résident dans le fait principalement d'être longs et de consommer beaucoup d'énergie, ce qui se traduit par un coût de fabrication élevé du produit alimentaire. De plus, avec ces procédés traditionnels, il est difficile d'obtenir des produits alimentaires homogènes du fait des conditions de fabrication. En outre, ces procédés ne permettent pas de fabriquer des produits à textures expansées et croustillantes telles que celles obtenues par cuisson-extrusion de produits à base d'amidon et de protéines.

Or, l'obtention par cuisson-extrusion de produits alimentaires expansés et contenant des inclusions visibles pose des problèmes.

En effet, pour réaliser un produit alimentaire expansé, il est nécessaire que le produit qui est extrudé à la sortie de la machine d'extrusion et qui est formé par un mélange contenant de l'eau, passe dans le diagramme pression-température de l'eau, d'une zone où l'eau est à l'état liquide vers une zone où règnent des conditions normales de pression et de température et où l'eau est à l'état gazeux.

Les conditions régnant à l'intérieur du fourreau de la machine d'extrusion sont exacerbées par des taux de cisaillement importants dus aux vis co-pénétrantes et autonettoyantes de cette machine d'extrusion, car la matière doit être transformée, ou cuite, par application d'énergie mécanique. Pour cela, la composition des vis de la machine d'extrusion comprend de façon courante des zones de mélange et de fort cisaillement, avec des éléments de vis à pas inverse ou des disques malaxeurs, qui broient et réduisent considérablement la taille des inclusions introduites à l'entrée au niveau de l'alimentation de la machine d'extrusion.

De plus, des niveaux de pression élevés règnent également à l'intérieur du fourreau de la machine d'extrusion afin de créer des zones totalement remplies où s'effectue la transformation de la matière.

Enfin, la conception des filières situées à la sortie des machines d'extrusion n'est généralement pas adaptée à l'écoulement de mélanges enrichis en inclusions macroscopiques ce qui peut créer des bouchages.

Par conséquent, l'introduction des inclusions dans le fourreau de la machine d'extrusion au niveau de la zone d'alimentation en matière première provoque une dégradation de ces inclusions car elles subissent un travail excessif. Ainsi, la présence de ces inclusions dans le produit final n'est pas visible et ces inclusions sont dégradées.

Pour résoudre ce problème, l'homme du métier pense naturellement à introduire les inclusions dans une zone située en aval de la zone d'alimentation par rapport au sens d'écoulement de la matière dans cette machine d'extrusion. Mais cela ne permet pas de résoudre le problème car les inclusions doivent en plus être introduites à l'intérieur du fourreau sous faible pression et sous faible cisaillement pour éviter leur écrasement mécanique.

De plus, dans la machine d'extrusion, le produit travaillé est cuit et porté à une température égale ou légèrement supérieure à 100°C. Si les inclusions sont introduites dans ce produit dans une zone à faible pression, l'eau surchauffée qu'il contient va se libérer sous forme de vapeur empêchant les inclusions de rentrer dans le produit.

On connaît également dans le document FR-A 2 879 898, un procédé d'obtention à l'aide d'une machine d'extrusion à au moins une vis, d'un produit alimentaire à partir d'au moins une matière contenant des carbohydrates et/ou des protéines. Ce produit contient des inclusions solides de taille supérieure à 0,5 mm introduites en continu dans la matière au plus tôt lors de la cuisson de ladite matière au cours d'une étape de compression, de malaxage et de cuisson.

Les inclusions sont introduites dans le fourreau de la machine d'extrusion à l'aide d'un doseur comportant un conduit d'amenée de ces inclusions qui débouche dans ledit fourreau au niveau de la zone de cuisson.

Ce procédé connu présente des inconvénients.

En effet, lors du travail et du chauffage de la matière dans le fourreau de la machine, il se produit de la vapeur qui remonte systématiquement dans le doseur par le conduit d'amenée. Cette remontée de vapeur tend à humidifier les inclusions avant leur alimentation dans le fourreau et à perturber la régularité du dosage desdites inclusions dans la matière.

De plus, compte tenu de l'incorporation des inclusions dans la zone de cuisson et de mélange intense, ces inclusions sont soumises à des conditions relativement sévères du fait du cisaillement et elles sont également soumises à une température élevée de l'ordre de 130 à 150°C.

Compte tenu de ces conditions, ajoutées au fait qu'elles sont préhumidifiées à cause de la vapeur, les inclusions les plus fragiles, comme par exemple les flocons de céréales, les fruits rouges déshydratés, ou les légumes pauvres en fibres, fondent et se noient dans la masse de la matière cuite et disparaissent. Le rendement est pratiquement nul en inclusions visibles dans le produit final.

Les inclusions à fragilité intermédiaire, comme par exemples les légumes fibreux, sont dégradées en partie et donnent un rendement de 10 à 20% en inclusions visibles dans le produit final.

Ainsi, seules les inclusions très riches en fibre, comme par exemple les petites graines, et surtout les inclusions très dures, comme par exemple les brisures de céréales, résistent à cette dégradation après leur introduction dans la machine d'extrusion et donnent un rendement de 20 à 50% en inclusions visibles dans le produit final. Ce résultat est acceptable mais onéreux car il nécessite une consommation relativement élevée d'inclusions pour obtenir un résultat satisfaisant en matière de visibilité des inclusions dans le produit obtenu.

Ainsi, l'incorporation d'inclusions dans un produit alimentaire expansé et consommable, obtenu par cuisson-extrusion pose des problèmes.

L'invention a donc pour but de résoudre ces problèmes en proposant un procédé de fabrication en continu d'un produit alimentaire consommable et expansé qui contient des inclusions solides et visibles et qui est réalisé à partir d'une matière contenant des carbohydrates et/ou des protéines.

A cet effet, l'invention a pour objet un procédé de fabrication en continu d'un produit alimentaire expansé, consommable contenant des inclusions solides de taille supérieure à 0,5mm et obtenu à partir d'une matière première solide contenant en partie des carbohydrates et/ou des protéines, **caractérisé en ce que** dans un fourreau d'une machine d'extrusion à au moins une vis :
- on introduit au cours d'une première étape la matière première avec éventuellement au moins un additif et on introduit éventuellement de l'eau additionnelle,
- on mélange au cours d'une deuxième étape la matière première, ledit au moins additif et l'eau et on effectue une cuisson de ce mélange pour obtenir une pâte cuite,
- on comprime au cours d'une troisième étape, la pâte en formant un bouchon d'étanchéité afin de maintenir les étapes précédentes sous pression et limiter les fuites de vapeur vers l'aval,
- on effectue un dégazage de la pâte dans une quatrième étape de détente afin de réduire la pression en aval dans le fourreau,
- on introduit dans la pâte les inclusions au cours d'une cinquième étape,
- on mélange au cours d'une sixième étape à faible taux de cisaillement la pâte et les inclusions pour obtenir un mélange homogène avec une répartition uniforme des inclusions dans la pâte, et
- au cours d'une septième étape, on pousse le mélange pâte-inclusions dans une filière à très faible taux de cisaillement à la sortie de laquelle le mélange s'expanse.

Selon d'autres caractéristiques avantageuses du procédé :
- la matière première est constituée par de la poudre de farine et/ou de semoule, comme par exemple du blé, du maïs, du soja et/ou du gluten, et
- l'additif est constitué par exemple par du sel et/ou du sucre et/ou des vitamines et/ou des fibres et/ou au moins un colorant ou par tout autre composant.

L'invention a également pour objet une installation de fabrication en continu d'un produit alimentaire expansé et consommable, contenant des inclusions solides de taille supérieure à 0, 5 mm et obtenu à partir d'une matière première solide contenant en partie des carbohydrates et/ou des protéines, **caractérisée en ce qu'**elle comprend une machine d'extrusion comportant au moins une vis entraînée en rotation à l'intérieur d'un fourreau de forme allongée déterminant successivement de l'amont à l'aval :
- une première zone d'introduction de la matière première et éventuellement d'au moins un additif, puis d'introduction éventuellement d'eau additionnelle,
- une deuxième zone de mélange de la matière première, dudit au moins additif et de l'eau et de cuisson de ce mélange pour obtenir une pâte cuite,
- une troisième zone de compression de la pâte en formant un bouchon d'étanchéité pour maintenir les zones précédentes sous pression et limiter les fuites de vapeur vers l'aval,
- une quatrième zone de détente par dégazage de la pâte pour réduire la pression à l'intérieur du fourreau en aval,
- une cinquième zone d'introduction dans la pâte des inclusions,
- une sixième zone à faible taux de cisaillement de la pâte et des inclusions pour obtenir un mélange homogène avec une répartition uniforme des inclusions dans la pâte, et
- une septième zone d'extrusion du mélange pâte-inclusions dans une filière à très faible taux de cisaillement avec expansion de ce mélange à la sortie de ladite filière.

L'invention sera mieux comprise à la lecture de la description qui va suivre, donnée à titre d'exemple et faite en se référant aux dessins annexés, sur lesquels :
- la Fig. 1 est une vue schématique, en perspective et avec arrachement partiel, d'une machine d'extrusion pour la préparation d'un produit alimentaire à partir d'un procédé de fabrication, conforme à l'invention,
- la Fig. 2 est une vue latérale, schématique et simplifiée de la machine d'extrusion avec une variante des moyens d'introduction des inclusions,
- la Fig. 3 est une vue schématique en coupe transversale du produit alimentaire obtenu à l'aide du procédé de fabrication, conforme à l'invention, et
- la Fig. 4 est une vue schématique en coupe transversale d'une variante du produit alimentaire obtenu par le procédé de fabrication, conforme à l'invention.

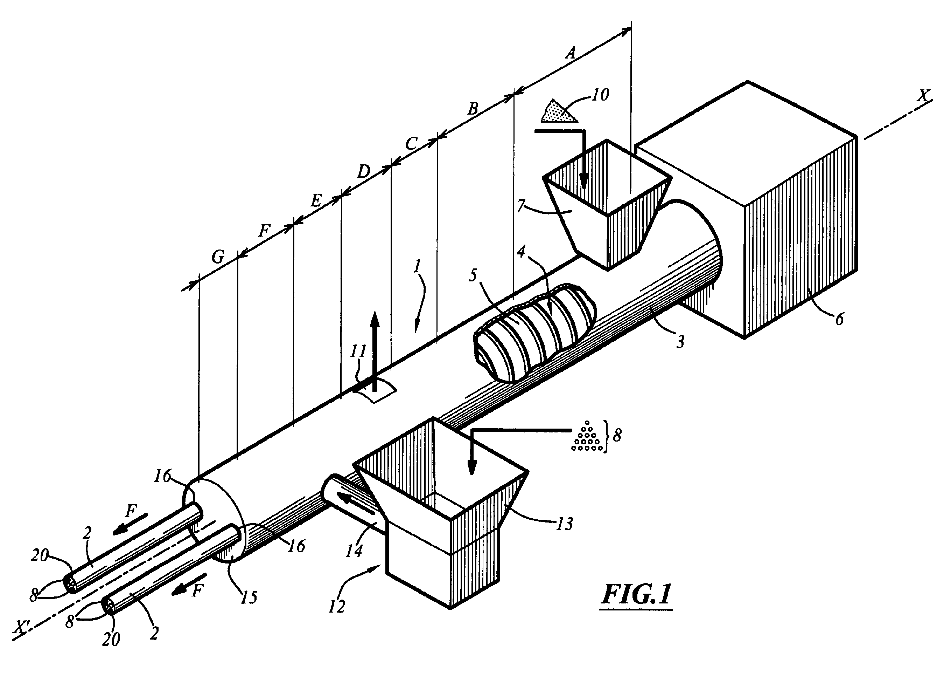

Sur la Fig. 1, la flèche F symbolise le sens de progression de la matière dans une machine d'extrusion qui est désignée dans son ensemble par la référence 1.

Cette machine d'extrusion 1 destinée à la fabrication en continu d'un produit alimentaire 2 expansé, consommable et contenant des inclusions solides de taille supérieure à 0,50mm, comporte un fourreau 3 qui présente la forme d'un corps creux et qui délimite une chambre allongée 4.

Dans cette chambre 4 est montée au moins une vis 5 longitudinale et rotative de traitement, de compression, de malaxage et/ou de cisaillement et cette vis 5 est accouplée à des moyens d'entraînement en rotation 6, connus en eux mêmes.

Selon une variante, la machine d'extrusion 1 peut être équipée, dans la chambre 4, de deux vis co-rotatives et co-pénétrantes et au moins sur une partie de leur longueur autonettoyantes.

Dans ce qui suit, la description sera faite pour une machine d'extrusion 1 comportant une vis 5 et les termes "amont" et "aval" ainsi que les termes analogues, se réfèrent au sens de progression de la matière dans la machine d'extrusion, désigné par la flèche F.

Le fourreau 3 et la vis 5 déterminent, par rapport au sens d'avancement F de la matière, plusieurs zones successives de traitement. A cet effet et d'une manière connue en soi, la vis 5 est équipée de plusieurs tronçons successifs, parmi lesquels il peut y avoir notamment un ou plusieurs tronçons de compression, un ou plusieurs tronçons de malaxage et un ou plusieurs tronçons de freinage.

Selon le tronçon, la vis 5 peut être pourvue notamment d'un filet à pas large, d'un filet à pas serré, d'un filet à pas inversé, ou bien de disques malaxeurs. La manière dont les différents tronçons de la vis se succèdent le long de l'axe XX' est choisie en fonction du traitement et/ou de la matière première et/ou du type de produit alimentaire que l'on souhaite fabriquer.

Ainsi, le fourreau 3 et la vis 5 déterminent une première zone A d'introduction de la matière première 10 et éventuellement d'au moins un additif, puis d'introduction éventuellement d'eau additionnelle. Dans cette zone A, la matière première solide sous forme de poudre est introduite et cette matière première peut être des farines, des semoules, comme par exemple du blé, du maïs, du soja et/ou du gluten. Les additifs également introduits dans cette zone A sont constitués par exemple par du sel, du sucre ou sont constitués par des vitamines, des fibres et/ou des colorants. De l'eau est éventuellement introduite dans cette zone A en aval de l'introduction de la matière première et des additifs.

Selon différentes possibilités, on peut préparer séparément un mélange contenant la matière première, les additifs et l'eau et l'introduire en un seul point dans la zone A de la machine d'extrusion 1. Les additifs peuvent également être inclus dans la matière première.

La matière première contient des carbohydrates et/ou des protéines de façon importante.

Pour permettre l'introduction de la matière première 10 et des additifs dans la machine d'extrusion 1, le fourreau 3 est pourvu d'une trémie d'alimentation 7 dont le volume intérieur communique avec la chambre 4 délimitée à l'intérieur du fourreau 3. La trémie 7 est approvisionnée régulièrement ou continûment avec de la matière première 10 et des additifs et un orifice, non représenté, d'injection d'eau dans la chambre 4 est prévu en aval de la trémie 7.

Les différents ingrédients ainsi introduits dans la zone A de la machine d'extrusion 1 sont transférés, à la sortie de cette zone A, dans une deuxième zone B de mélange et de cuisson pour obtenir une pâte cuite. Dans cette deuxième zone, la vis 5 présente un pas direct se réduisant progressivement de l'amont à l'aval de cette zone B. Par exemple, la vis 5 dans la deuxième zone B comporte des disques malaxeurs et/ou mélangeurs et/ou au moins un élément de vis à pas inverse et la température du mélange dans cette zone B est de l'ordre de 140°C.

Pour cela, le fourreau 3 est pourvu de moyens de chauffage, non représentés, qui, par exemple, sont placés sur le fourreau 3. Ils peuvent comprendre une ou plusieurs jaquettes annulaires de type classique, non représentées, placées au contact du fourreau 3 et parcourues par un fluide caloporteur ou par un courant électrique, auquel cas il y a transfert de la chaleur par conduction dans ce fourreau 3 jusqu'au mélange à cuire présent dans la chambre 4. En variante, on peut également prévoir des moyens de chauffage du fourreau 3 par induction.

A la sortie de la deuxième zone B, la pâte cuite est transférée dans une troisième zone C de compression de la pâte en formant un bouchon d'étanchéité pour maintenir la zone B précédente sous pression et limiter les fuites de vapeur d'eau vers l'aval de la chambre 4. La vis 5 est équipée, dans cette troisième zone C, d'au moins un élément de vis à pas inverse, comme par exemple des contre-filets ou des disques malaxeurs ou d'autres éléments appropriés sans effet moteur sur la pâte afin de conserver les zones précédentes sous pression en formant un bouchon de pâte.

Après ce bouchon, la pression à l'intérieur du fourreau 3 est réduite et la mise à faible pression de la pâte est organisée dans une quatrième zone D appelée zone de détente.

Cette réduction de pression est obtenue grâce à la vis 5 qui présente un grand pas direct et grâce à au moins un orifice 11 de mise à l'air libre ou de dégazage ménagé dans le fourreau 3 et qui permet à la pression de s'évacuer.

En effet, cet orifice 11 permet de réduire la pression dans la chambre 4 à l'intérieur du fourreau 3 au niveau de cette zone D et d'évacuer la vapeur en dehors de la machine d'extrusion 1.

Après cette zone de dégazage D, les inclusions 8 comestibles et solides sont introduites dans la chambre 4 à l'intérieur du fourreau 3 par des moyens d'injection en continu desdites inclusions, dans une cinquième zone E.

Les moyens d'injection en continu des inclusions peuvent être de tout type approprié. Par exemple, ces moyens sont constitués par un doseur 12 d'introduction sous pression des inclusions dans la chambre 4 et, à cet effet, le doseur 12 comporte une trémie 13 reliée au fourreau 3 par un conduit 14 qui renferme une vis d'Archimède, non représentée, et destinée à entraîner les inclusions.

Dans l'exemple représenté à la Fig. 1, le doseur 12 est disposé latéralement par rapport au fourreau 3.

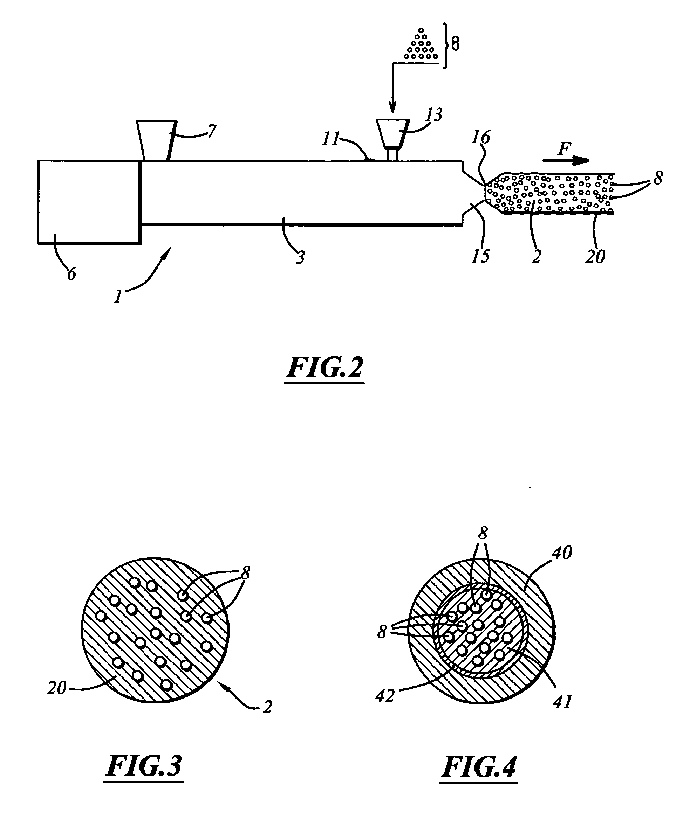

Selon une variante, le doseur 12 peut être disposé verticalement au-dessus du fourreau 3, comme montré à la Fig. 2.

Pour ces deux possibilités d'introduction des inclusions 8, la pression dans la chambre 4 de la machine d'extrusion 1 doit être inférieure à 10 bars.

Selon encore une autre variante, les inclusions 8 peuvent être introduites dans la chambre 4 de façon gravitaire par une ouverture à l'air libre ménagée dans le fourreau 3. Dans ce cas, la pression dans la chambre 4 au niveau de l'introduction des inclusions doit être nulle.

Les inclusions 8 sont toutes de même nature ou de nature différentes mélangées entre elles. Ces inclusions peuvent être choisies notamment parmi des fragments de fruits ou de légumes déshydratés et/ou des graines fragmentées ou non. Ces inclusions 8 peuvent également être choisies parmi des supports ou éclats aromatiques par exemple de menthe ou d'orange, des fruits secs, des fragments de fromage, des fragments de biscuits et/ou des noix fragmentées ou non, telles que des noix de coco, des amandes, des noix de cajou, des noix de macadamia et des noisettes.

Les inclusions 8 ont une taille supérieure à 0,5 mm et qui, avantageusement, est supérieure à environ 1mm. De préférence, la taille des inclusions 8 est inférieure à 10 mm ou à environ 20 mm et dans certains cas, elle peut être égale ou supérieure à 20 mm.

Ensuite, la pâte et les inclusions sont transférées dans une sixième zone F à faible taux de cisaillement pour obtenir un mélange homogène avec une répartition uniforme des inclusions dans la pâte.

Dans cette sixième zone F, le profil de vis a un taux de cisaillement au moins deux fois plus faibles que dans les zones C et D.

Dans le cas d'une machine d'extrusion à deux vis, les vis 5 présentent dans cette sixième zone F un diamètre extérieur réduit et ces vis sont co-pénétrantes, mais pas autonettoyantes avec des tolérances telles que les inclusions 8 ne soient ni écrasées, ni broyées durant leur passage dans cette sixième zone F. La majeure partie des inclusions 8 reste en périphérie du volume balayé par les vis.

Selon une variante, dans cette sixième zone F, les vis à plusieurs filets peuvent avoir un des filets réduit en hauteur ou complètement supprimé pour laisser un passage annulaire ou un volume libre de grandes dimensions, disponible pour la circulation de la matière et des inclusions 8.

Selon une autre variante, les vis à deux filets dans cette sixième zone F peuvent avoir un pas très grand.

D'une manière générale et de façon surprenante, il se produit dans cette sixième zone F un effet de mélange sans écrasement mécanique et les inclusions 8 sont uniformément réparties dans la masse de la pâte.

A titre d'exemple, le rapport dans les différentes zones entre le pas du filet de la vis 5 et le diamètre extérieur de cette vis 5 est le suivant :
- zone A : le rapport est supérieur à 1 et de préférence compris entre 1 et 1,5,
- zone B : les pas directs vont en se réduisant progressivement et le rapport descend au minimum à 0,3 et est de préférence compris entre 0,35 et 0,5,
- zone D : le rapport est compris entre 1 et 1,5,
- zone E : le rapport est compris entre 1 et 1, 5.

A la fin de la sixième zone F, la pression à l'intérieur du fourreau 3 est de l'ordre de 60 à 100 bars et la température du mélange qui peut atteindre 120°C, est toutefois maintenue aussi proche que possible de 100°C pour préserver l'intégrité des inclusions.

Au cours d'une septième étape G, le mélange pâte-inclusions est poussé dans une filière 15 à très faible taux de cisaillement à la sortie de laquelle le mélange s'expanse.

La filière 15 comporte au moins un orifice d'extrusion 16 et de préférence, plusieurs orifices 16 ayant chacun un diamètre au moins égal à 0,5 mm.

Lorsque le mélange à la sortie de la sixième zone F pénètre dans les orifices 16 de la filière 15, il est soumis à des conditions de pression de l'ordre de 60 à 100 bars à une température maintenue aussi proche que possible de 100°C pour préserver l'intégrité des inclusions.

Dans ces conditions, l'eau contenue dans le mélange est à l'état liquide et parfaitement mélangée avec la matière amylacée 8. Lorsque le mélange émerge de la filière 15, elle passe subitement d'une pression élevée à la pression atmosphérique entraînant ainsi une chute de pression importante qui provoque une vaporisation flash de l'eau contenue dans la matière, et la vapeur d'eau produite génère des petites bulles dans cette matière encore à l'état fondu. Ces bulles grossissent en raison de la production importante de vapeur d'eau. Cette production de vapeur d'eau provoque simultanément une chute de la température du produit jusqu'à une température de l'ordre de 100°C à la fin de l'étape d'expansion.

A titre d'exemple, un produit alimentaire 2 a pu être obtenu à partir d'une matière première solide contenant des carbohydrates et/ou des protéines, comme par exemple :
- farine ou semoule de maïs,
- farine de blé,
- farine d'avoine,
- farine de seigle,
- farine de riz, tapioca, patate douce,
- ou mélange de ces composants enrichis ou non de base protéique.

Les inclusions 8 sont par exemple :
- graines de céréale précuites, entières ou concassées, par exemple blé, maïs,
- morceaux de noix, noisettes, noix de cajou,
- graines de pavot, de sésame, de poivre, etc...
- morceaux de fruits déshydratés : abricots,
- morceaux de légumes déshydratés : carottes.

Le produit alimentaire 2 consommable directement obtenu à la sortie de la machine d'extrusion 1 peut avantageusement contenir 30 à 95% en poids de matière première et de 5 à 70% en poids d'inclusions 8 solides.

Le cycle complet de préparation du produit alimentaire 2 à l'aide de la machine d'extrusion 1 est continu et rapide, ce qui se traduit par une réduction du coût de fabrication de ce produit 2 conformément au but de l'invention.

La réduction de coût résulte également de ce que la machine d'extrusion 1 a une faible consommation d'énergie. De plus, la fabrication en continu du produit alimentaire 2 par la machine d'extrusion 1 permet d'économiser du temps par rapport à un procédé discontinu dans lequel il se produit inévitablement une perte de temps lors de la transition entre les étapes successives.

Après la sortie de la filière 15, le produit alimentaire 2 représenté à la Fig. 3 directement obtenu comporte une matrice comestible 20 qui résulte de la transformation de la matière première par cuisson-extrusion et dans laquelle sont noyées et disposées de façon sensiblement homogène les inclusions 8.

Par exemple, la matrice 20 peut être un produit du type cracker ou biscuit croustillant. En effet, comme elle est obtenue par cuisson-extrusion, la matrice 20 présente alors une texture expansée et croustillante, identique au produit extrudé et contenant en plus des inclusions solides.

Comme l'introduction des inclusions 8 dans la pâte est continue et pilotée en fonction du débit de cette pâte, la répartition des inclusions 8 le long des boudins de produit alimentaire 2 à la sortie de la machine d'extrusion 1 est sensiblement constante, ce qui est avantageux.

De plus, la dispersion des inclusions 8 dans la matrice 20 est sensiblement uniforme ce qui est également avantageux.

Selon une variante représentée à la Fig. 4, le produit alimentaire 2 comprend une gaine extérieure 40 qui est expansée et qui renferme un coeur 41 où se trouve les inclusions 8. Dans cet exemple, les inclusions 8 sont noyées dans un fourrage comestible qui constitue le coeur 41, qui peut être notamment une pâte et dans laquelle les inclusions 8 peuvent être dispersées de manière homogène.

Par exemple, ce produit peut comporter une couche intermédiaire 42 se présentant sous la forme d'une gaine tubulaire et séparant le fourrage 41 contenant les inclusions 8, de la gaine 40.

D'une manière générale, le procédé selon l'invention permet de résoudre les problèmes d'introduction et de répartition des inclusions dans un produit obtenu par une machine à extrusion et présente des avantages par rapport à l'état de la technique.

Le problème est ainsi résolu par une combinaison de plusieurs éléments et qui sont :
- une plus grande spécialisation des zones de travail du profil des vis de manière à découpler la zone B de cuisson par rapport à la zone E d'introduction des inclusions, cette zone E pouvant comporter un profil de vis à faible taux de cisaillement, c'est à dire à pas large ou modifié géométriquement pour créer un passage annulaire ou un volume libre de grandes dimensions, et donc peu traumatisant pour les inclusions les plus fragiles ou à fragilité intermédiaire, et
- l'incorporation dans la machine d'extrusion, d'une zone D de dégazage entre les zones B et E avec la création d'un bouchon d'étanchéité dans la zone C entre les zones B et E, ce qui permet d'éliminer la vapeur en amont de l'alimentation des inclusions et de diminuer la température dans ladite zone d'alimentation à une valeur de l'ordre de 100°C ce qui s'avère favorable vis à vis des inclusions les plus fragiles.

Ces aménagements permettent d'augmenter de manière significative les rendements en inclusions visibles dans le produit final, notamment pour les inclusions les plus fragiles et à fragilité intermédiaire qui sont avec le procédé selon l'invention compris entre 20 et 50% et également pour les inclusions les plus résistantes qui sont de 60 à 90% avec ce procédé.

## Revendications

1. Procédé de fabrication en continu d'un produit alimentaire (2) expansé et consommable contenant des inclusions (8) solides de taille supérieure à 0,5 mm et obtenu à partir d'une matière première (10) solide contenant en partie des carbohydrates et/ou des protéines, **caractérisé en ce que**, dans un fourreau (3) d'une machine d'extrusion (1) à au moins une vis (5) :
- on introduit au cours d'une première étape la matière première (10) avec éventuellement au moins un additif et on introduit éventuellement de l'eau additionnelle,
- on mélange au cours d'une deuxième étape la matière première (10), ledit au moins additif et l'eau et on effectue une cuisson de ce mélange pour obtenir une pâte cuite,
- on comprime au cours d'une troisième étape la pâte en formant un bouchon d'étanchéité afin de maintenir les étapes précédentes sous pression et limiter les fuites de vapeur vers l'aval,
- on effectue un dégazage de la pâte dans une quatrième étape de détente afin de réduire la pression en aval dans le fourreau (3),
- on introduit dans la pâte les inclusions (8) au cours d'une cinquième étape,
- on mélange au cours d'une sixième étape à faible taux de cisaillement, la pâte et les inclusions (8) pour obtenir un mélange homogène avec une répartition uniforme des inclusions (8) dans ladite pâte, et
- au cours d'une septième étape, on pousse le mélange pâte-inclusions dans une filière 15 à très faible taux de cisaillement à la sortie de laquelle le mélange s'expanse.

2. Procédé selon la revendication 1, **caractérisé en ce que** la matière première (10) est constituée par de la poudre de farine et/ou de la semoule.

3. Procédé selon la revendication 1 ou 2, **caractérisé en ce que** ledit au moins additif est constitué par exemple par du sel et/ou du sucre, et/ou des vitamines et/ou des fibres et/ou au moins un colorant et/ou par tout autre composant.

4. Procédé selon l'une quelconque des revendications 1 à 3, **caractérisé en ce que** le rendement en inclusions visibles est compris entre 20 et 50% pour les inclusions les plus fragiles et à fragilité intermédiaire et compris entre 60 et 90% pour les inclusions les plus résistantes.

5. Installation de fabrication en continu d'un produit alimentaire (2) expansé et consommable contenant des inclusions (8) solides de taille supérieure à 0,5 mm et obtenu à partir d'une matière première (10) solide contenant en partie des carbohydrates et/ou des protéines, **caractérisée en ce qu'**elle comprend une machine d'extrusion (1) comportant au moins une vis (5) entraînée en rotation à l'intérieur d'un fourreau (3) de forme allongée déterminant successivement de l'amont à l'aval :
- une première zone A d'introduction de la matière première (10) et éventuellement d'au moins un additif, puis d'introduction éventuellement d'eau additionnelle,
- une deuxième zone B de mélange de la matière première (10), dudit au moins additif et de l'eau et de cuisson de ce mélange pour obtenir une pâte cuite,
- une troisième zone C de compression de la pâte en formant un bouchon d'étanchéité pour maintenir les zones précédentes sous pression et limiter les fuites de vapeur vers l'aval,
- une quatrième zone D de détente par dégazage de la pâte pour réduire la pression à l'intérieur du fourreau (3) en aval,
- une cinquième zone E d'introduction dans la pâte des inclusions (8),
- une sixième zone F à faible taux de cisaillement de la pâte et des inclusions (8) pour obtenir un mélange homogène avec une répartition uniforme des inclusions (8) dans la pâte, et
- une septième zone G d'extrusion du mélange pâte-inclusions dans une filière (15) à très faible taux de cisaillement avec expansion de ce mélange à la sortie de ladite filière (15).

6. Installation selon la revendication 5, **caractérisée en ce que** dans la première zone A, ladite au moins vis (5) présente un grand pas direct.

7. Installation selon la revendication 5 ou 6, **caractérisée en ce que** dans la deuxième zone B, ladite au moins vis (5) présente un pas direct se réduisant progressivement de l'amont à l'aval de cette zone.

8. Installation selon la revendication 7, **caractérisée en ce que** ladite au moins vis (5) dans la deuxième zone comporte des disques malaxeurs et/ou mélangeurs, et/ou au moins un élément de vis à pas inverse.

9. Installation selon l'une quelconque des revendications 5 à 8, **caractérisée en ce que** dans la deuxième zone B, la température de mélange est de l'ordre de 140°C.

10. Installation selon l'une quelconque des revendications 5 à 9, **caractérisée en ce que** dans la troisième zone C, ladite au moins vis (5) comporte au moins un élément de vis à pas inverse ou des disques malaxeurs.

11. Installation selon l'une quelconque des revendications 5 à 10, **caractérisée en ce que** dans la quatrième zone D, ladite au moins vis (5) présente un grand pas direct et le fourreau (3) comporte au moins un orifice (11) de mise à l'air libre.

12. Installation selon l'une quelconque des revendications 5 à 11, **caractérisée en ce que** dans la sixième zone F, le taux de cisaillement est au moins deux fois plus faibles que dans les troisième et quatrième zones C et D.

13. Installation selon l'une quelconque des revendications 5 à 12, **caractérisée en ce que** dans la sixième zone F, ladite au moins vis 5 ménage avec la paroi interne du fourreau 3 un passage annulaire ou un volume libre de grandes dimensions pour la circulation du mélange pâte-inclusions.

14. Installation selon l'une quelconque des revendications 5 à 13, **caractérisée en ce qu'**à la fin de la sixième zone F, la pression à l'intérieur du fourreau 3 est de l'ordre de 60 à 100 bars et la température de mélange est maintenue inférieure à 120°C.

15. Installation selon l'une quelconque des revendications 5 à 14, **caractérisée en ce que** la filière 15 comporte au moins un orifice 16 d'extrusion de diamètre au moins égal à 0,5 mm.

16. Installation selon l'une quelconque des revendications 5 à 15, **caractérisée en ce que** la machine d'extrusion (1) comporte deux vis (5) co-pénétrantes et co-rotatives.

## Claims

1. A method for the continuous production of an expanded edible food product (2) containing solid inclusions (8) larger than 0.5 mm and obtained from a solid raw material (10) containing in part carbohydrates and/or proteins, **characterised in that**, in a cylinder (3) of an extruder (1) having at least one screw (5):
- during a first step the raw material (10) is introduced optionally with at least one additive and additional water is optionally introduced,
- during a second step, the raw material (10), said at least one additive and the water are mixed and the resulting mixture is cooked to obtain a cooked dough,
- during a third step, the dough is compressed, forming a sealing plug in order to keep the preceding steps under pressure and to limit steam leakages in a downstream direction,
- the dough is degassed in a fourth pressure-relieving step in order to reduce the pressure downstream in the cylinder (3),
- the inclusions (8) are introduced into the dough during a fifth step,
- during a sixth step the dough and the inclusions (8) are mixed at low shear rate to obtain a homogenous mixture with a uniform distribution of the inclusions (8) in said dough, and
- during a seventh step the dough/inclusions mixture is pushed into a very low shear rate die 15, at the outlet of which the mixture expands.

2. A method according to claim 1, **characterised in that** the raw material (10) consists of powdered flour and/or semolina.

3. A method according to claim 1 or claim 2, **characterised in that** said at least one additive consists, for example, of salt and/or sugar and/or vitamins and/or fibres and/or at least one colouring agent and/or any other component.

4. A method according to any one of claims 1 to 3, **characterised in that** the yield of visible inclusions is between 20 and 50% for the most fragile inclusions and those of intermediate fragility and between 60 and 90% for the most robust inclusions.

5. An installation for the continuous production of an expanded and edible food product (2) containing solid inclusions (8) larger than 0.5 mm and obtained from a solid raw material (10) containing in part carbohydrates and/or proteins, **characterised in that** it comprises an extruder (1) comprising at least one screw (5) driven in rotation inside an elongate cylinder (3) successively defining from upstream to downstream:
- a first zone A for introducing the raw material (10) and optionally at least one additive, then for optionally introducing additional water,
- a second zone B for mixing the raw material (10), said at least one additive and water, and for cooking said mixture to obtain a cooked dough,
- a third zone C for compressing the dough, forming a sealing plug to keep the preceding zones under pressure and to limit steam leakages in a downstream direction,
- a fourth zone D for relieving pressure by degassing the dough to reduce the pressure inside the cylinder (3) downstream,
- a fifth zone E for introducing inclusions (8) into the dough,
- a sixth zone F with a low shear rate for the dough and inclusions (8) to obtain a homogenous mixture with a uniform distribution of inclusions (8) in the dough, and
- a seventh zone G for extruding the dough/inclusions mixture in a very low shear rate die (15), with expansion of this mixture at the outlet of said die (15).

6. An installation according to claim 5, **characterised in that** in the first zone A, said at least one screw (5) has a large direct pitch.

7. An installation according to claim 5 or claim 6, **characterised in that**, in the second zone B, said at least one screw (5) has a direct pitch which reduces gradually from upstream to downstream within this zone.

8. An installation according to claim 7, **characterised in that**, in the second zone, said at least one screw (5) comprises kneading and/or mixing discs and/or at least one reverse pitch screw element.

9. An installation according to any one of claims 5 to 8, **characterised in that**, in the second zone B, the mixing temperature is of the order of 140°C.

10. An installation according to any one of claims 5 to 9, **characterised in that**, in the third zone C, said at least one screw (5) comprises at least one reverse pitch screw element or kneading discs.

11. An installation according to any one of claims 5 to 10, **characterised in that**, in the fourth zone D, said at least one screw (5) has a large direct pitch and the cylinder (3) comprises at least one venting orifice (11).

12. An installation according to any one of claims 5 to 11, **characterised in that**, in the sixth zone F, the rate of shear is at least twice as low as in the third and fourth zones C and D.

13. An installation according to any one of claims 5 to 12, **characterised in that**, in the sixth zone F, said at least one screw 5 creates with the internal wall of the cylinder 3 an annular passage or a large free volume for passage of the dough/inclusions mixture.

14. An installation according to any one of claims 5 to 13, **characterised in that**, at the end of the sixth zone F, the pressure inside the cylinder 3 is of the order of 60 to 100 bar and the mixing temperature is kept below 120°C.

15. An installation according to any one of claims 5 to 14, **characterised in that** the die 15 comprises at least one extrusion orifice 16 having a diameter at least equal to 0.5 mm.

16. An installation according to any one of claims 5 to 15, **characterised in that** the extruder (1) comprises two co-penetrating and co-rotating screws (5).

## Patentansprüche

1. Verfahren zur kontinuierlichen Herstellung eines aufgeblähten und genießbaren Nahrungsmittelprodukts (2), welches feste Einschlüsse (8) mit einer Teilchengröße größer als 0,5 mm aufweist und erhalten worden ist ausgehend von einem festen Ausgangsmaterial (10), welches teilweise Kohlenhydrate und/oder Proteine enthält, **dadurch gekennzeichnet, dass** man in ein Gehäuse (3) einer Extrusionsvorrichtung (1) mit mindestens einer Schnecke (5):
- im Verlaufe einer ersten Stufe das Ausgangsmaterial (10) gegebenenfalls zusammen mit mindestens einem Additiv einführt und gegebenenfalls zusätzliches Wasser einführt,
- im Verlaufe einer zweiten Stufe das Ausgangsmaterial (10), das mindestens eine Additiv und das Wasser vermischt und diese Mischung zur Bildung eines gekochten Teigs kocht,
- im Verlaufe einer dritten Stufe den Teig verdichtet, indem man einen dichten Pfropfen bildet, um die vorhergehenden Stufen unter Druck zu halten und das Entweichen von Dampf stromabwärts in der Förderrichtung zu vermeiden,
- eine Entgasung des Teigs in einer vierten Entspannungsstufe bewirkt, um den Druck in dem Gehäuse (3) stromabwärts in der Förderrichtung zu verringern,
- im Verlaufe einer fünften Stufe die Einschlüsse (8) in den Teig einführt,
- im Verlaufe einer sechsten Stufe mit geringem Schergrad den Teig und die Einschlüsse (8) vermischt zur Bildung einer homogenen Mischung mit einer gleichmäßigen Verteilung der Einschlüsse (8) in dem Teig, und
- im Verlaufe einer siebten Stufe die Teig-Einschluss-Mischung in eine Verengung (15) mit sehr geringem Schergrad fördert, an deren Ausgang die Mischung sich expandiert.

2. Verfahren nach Anspruch 1, **dadurch gekennzeichnet, dass** das Ausgangsmaterial (10) aus einem aus pulverförmigem Mehl und/oder Gries gebildet ist.

3. Verfahren nach Anspruch 1 oder 2, **dadurch gekennzeichnet, dass** das mindestens eine Additiv beispielsweise aus Salz und/oder Zucker und/oder Vitaminen und/oder Fasern und/oder mindestens einem Farbstoff und/oder irgendeinem anderen Bestandteil gebildet wird.

4. Verfahren nach einem der Ansprüche 1 bis 3, **dadurch gekennzeichnet, dass** die Ausbeute an sichtbaren Einschlüssen zwischen 20 und 50 % für die brüchigsten Einschlüsse und die Einschlüsse mit mittlerer Brüchigkeit beträgt und zwischen 60 und 90 % für die beständigeren Einschlüsse beträgt.

5. Vorrichtung zur kontinuierlichen Herstellung eines expandierten und genießbaren Nahrungsmittelprodukts (2), welches feste Einschlüsse (8) mit einer Teilchengröße von mehr als 0,5 mm enthält und erhalten worden ist aus einem festen Ausgangsmaterial (10), welches teilweise Kohlenhydrate und/oder Proteine enthält, **dadurch gekennzeichnet, dass** sie eine Extrusionsvorrichtung (1) umfasst, die mindestens eine drehbare Schnecke (5) aufweist im Inneren eines Gehäuses (3) mit länglicher Form, das nacheinander vom Eintritt bis zum Ausgang aufweist:
- eine erste Zone A zur Einführung des Ausgangsmaterials (10) und gegebenenfalls mindestens eines Additivs und gegebenenfalls zur Einführung von zusätzlichem Wasser,
- eine zweite Zone B zum Vermischen des Ausgangsmaterials (10), des mindestens einen Additivs und des Wassers und zum Kochen dieser Mischung zur Bildung eines gekochten Teigs,
- eine dritte Zone C zur Verdichtung des Teigs durch Bildung eines dichten Pfropfens, um die vorhergehenden Zonen unter Druck zu halten und das Austreten von Dämpfen stromabwärts in der Förderrichtung zu begrenzen,
- eine vierte Zone D zur Entspannung durch Entgasen des Teigs zur Verringerung des Drucks im Inneren des Gehäuses (3) stromabwärts in der Förderrichtung,
- eine fünfte Zone E zur Einführung von Einschlüssen (8) in den Teig,
- eine sechste Zone F mit geringem Grad der Scherung des Teigs und der Einschlüsse (8) zur Bildung einer homogenen Mischung mit einer gleichmäßigen Verteilung der Einschlüsse (8) in dem Teig und
- eine siebte Zone G zur Extrusion der Teig-Einschluss-Mischung in eine Verengung (15) mit sehr geringem Schergrad und Expansion der Mischung am Austritt dieser Verengung (15).

6. Vorrichtung nach Anspruch 5, **dadurch gekennzeichnet, dass** die in der ersten Zone A vorhandene mindestens eine Schnecke (5) eine große direkte Steigung aufweist.

7. Vorrichtung nach Anspruch 5 oder 6, **dadurch gekennzeichnet, dass** die in der zweiten Zone B angeordnete mindestens eine Schnecke (5) eine direkte Steigung aufweist, die sich progressiv vom Eintritt zum Austritt dieser Zone verringert.

8. Vorrichtung nach Anspruch 7, **dadurch gekennzeichnet, dass** die in der zweiten Zone vorhandene mindestens eine Schnecke (5) Knetscheiben und/oder Mischscheiben und/oder mindestens ein Schneckenelement mit inverser Steigung aufweist.

9. Vorrichtung nach einem der Ansprüche 5 bis 8, **dadurch gekennzeichnet, dass** die Temperatur der Mischung in der zweiten Zone B im Bereich von 140 °C liegt.

10. Vorrichtung nach einem der Ansprüche 5 bis 9, **dadurch gekennzeichnet, dass** die in der dritten Zone C angeordnete mindestens eine Schnecke (5) mindestens ein Element mit inverser Steigung oder Knetscheiben umfasst.

11. Vorrichtung nach einem der Ansprüche 5 bis 10, **dadurch gekennzeichnet, dass** die in der vierten Zone D vorhandene mindestens eine Schnecke (5) eine große direkte Steigung aufweist und das Gehäuse (3) mindestens eine Entlüftungsöffnung (11) aufweist.

12. Vorrichtung nach einem der Ansprüche 5 bis 11, **dadurch gekennzeichnet, dass** der Schergrad in der sechsten Zone F mindestens zweimal geringer ist als in der dritten Zone C und der vierten Zone D.

13. Vorrichtung nach einem der Ansprüche 5 bis 12, **dadurch gekennzeichnet, dass** die in der sechsten Zone F vorhandene mindestens eine Schnecke (5) zusammen mit der inneren Wandung des Gehäuses (3) eine Ringöffnung oder ein freies Volumen mit großen Dimensionen zur Zirkulation der Teig-Einschluss-Mischung bildet.

14. Vorrichtung nach einem der Ansprüche 5 bis 13, **dadurch gekennzeichnet, dass** der Druck am Ende der sechsten Zone F im Inneren des Gehäuses (3) im Bereich von 60 bis 100 bar liegt und die Temperatur der Mischung unterhalb 120 °C gehalten wird.

15. Vorrichtung nach einem der Ansprüche 5 bis 14, **dadurch gekennzeichnet, dass** die Verengung (15) mindestens eine Extrusionsöffnung (16) mit einem Durchmesser von mindestens 0,5 mm aufweist.

16. Vorrichtung nach einem der Ansprüche 5 bis 15, **dadurch gekennzeichnet, dass** die Extrusionsvorrichtung (1) zwei dicht kämmende und gleichdrehende Schnecken umfasst.
